# EUROPÄISCHE PATENTSCHRIFT

(11) **EP 2 424 062 B1**
(45) Veröffentlichungstag und Bekanntmachung des Hinweises auf die Patenterteilung: **01.10.2014**
(21) Anmeldenummer: 11176381.9
(22) Anmeldetag: 03.08.2011
(51) Int. Cl.: H02H 1/06, H02H 3/087

(54) **Schalter, insbesondere Leistungsschalter für Niederspannungen, und Energieversorgung für eine elektronische Auslöseeinheit eines Schalters**
Switch, in particular Circuit breaker for Low Voltage, and power supply for an electronic trip unit of a switch
Appareil de coupure, en particulier disjoncteur basse tension, et dispositif de fourniture d'énergie pour une unité de déclenchement électronique d'un appareil de coupure

(30) Priorität: 26.08.2010 DE 102010036079
(43) Veröffentlichungstag der Anmeldung: 29.02.2012
(73) Patentinhaber: Siemens Aktiengesellschaft, 80333 München (DE)
(72) Erfinder: Götz, Josef, 92272 Freudenberg - Aschach (DE); Kiendl, Thomas, 92533 Wernberg-Köblitz (DE); Schmidt, Richard, 91083 Baiersdorf (DE); Weiss, Jörg, 09224 Chemnitz (DE)

(56) Entgegenhaltungen:
- DE-A1- 19 517 714
- US-A- 5 808 847

## Beschreibung

Die Erfindung betrifft einen Schalter, insbesondere Leistungsschalter für Niederspannungen, gemäß dem Oberbegriff des Anspruchs 1.

Schalter, insbesondere Leistungsschalter für Niederspannungen, sind bekannt und lastseitig mit zumindest einer Last verbunden. Bei Wechselstrombetrieb fließt ein Wechselstrom durch den durch den Schalter verlaufenden Stromleiter, bei geschlossenem Schalter über aneinander anliegende Kontaktelemente in Form von Kontaktstücken. Zum Öffnen des Schalters werden die Kontaktstücke voneinander getrennt. Eine im Schalter angeordnete elektronische Auslöseeinheit überwacht den Stromfluss und löst bei Überschreitung eines vorgegebenen Stromgrenzwerts eine Trennung der Kontaktstücke aus. Die Überschreitung des Stromgrenzwerts tritt sowohl bei einem Über- als auch bei einem Kurzschlussstrom auf.

Die Energieversorgung der elektronischen Auslöseeinheit erfolgt mittels eines transformatorischen Stromwandlers mit einem Kern aus einem ferromagnetischen Werkstoff, der über eine Primär- und über eine Sekundärwicklung verfügt, wobei die Primärwicklung von dem Leiter gebildet wird. Die Sekundärwicklung ist wiederum über eine Gleichrichterschaltung mit der Auslöseeinheit verbunden. Der Stromwandler versorgt also die elektronische Auslöseeinheit bei sich zeitlich änderndem Strom durch den Leiter, also insbesondere bei Wechselstrom, mit elektrischer Energie.

Da sich der Strom auch im Kurzschlussfall zeitlich ändert, übernimmt der transformatorische Stromwandler auch in diesem Fall die Energieversorgung, unabhängig davon, ob der Kurzschluss bei Gleich- oder Wechselstrombetrieb auftritt.

Die Energieversorgung kann selbstverständlich auch unabhängig vom Fließen eines Stroms mittels eines Energiespeichers, z.B. eines Kondensators oder einer Batterie erfolgen.

Nachteilig ist, dass bei Gleichstrombetrieb im Bereich des Nennstroms und bei Überstrom jeweils eine zweite Energieversorgung für die elektronische Auslöseeinheit vorhanden sein muss. Das transformatorische Prinzip des Stromwandlers ermöglicht keine Energieversorgung bei Gleichstrom, d.h. jeweils im eingeschwungenen Zustand nach dem Einschalten. Die bekannte Energiegewinnung aus der anliegenden Spannung ist beim Einschalten nicht schnell genug. Bei einem Kurzschluss liegt an der Last bzw. am Schalter eine sehr geringe Spannung an, die annähernd Null sein kann, so dass auch in diesem Fall ein Spannungsabgriff keine Lösung darstellt.

Die DE 195 17 714 A1 als nächstliegender Stand der Technik offenbart einen Schalter mit einer elektronischen Auslöseeinheit, deren Energiebedarf von der Sekundärwicklung eines transformatorischen Stromwandlers gedeckt wird. Allerdings reicht diese Energie im Fall eines Kurzschlusses nicht aus, weshalb ein weiterer Wandler eine externe Spannung abgreift und die Auslöseeinheit über seine Sekundärwicklung zusätzlich mit elektrischer Energie versorgt.

Die Aufgabe der Erfindung ist es, eine Energieversorgung der Auslöseeinheit auch bei Gleichstrombetrieb im Bereich des Nennstroms, des Überstroms und bei Kurzschluss sicherzustellen.

Die Aufgabe wird durch die Merkmale des Anspruchs 1 gelöst.

Die Lösung sieht vor, dass auf dem Kern des Stromwandlers zusätzlich zur ersten Wicklung eine zweite Wicklung angeordnet ist, welche die zweite Primärseite des Stromwandlers bildet, und dass ein Wandler vorgesehen ist, der am Leiter eine Spannung abgreift und die zweite Wicklung mit einem Wechselstrom speist, wenn die erste Wicklung zu wenig elektrischer Energie für die Versorgung der Auslöseeinheit liefert. D.h., dass für die Energieversorgung ein Stromwandler verwendet wird, der eine zusätzlich zur ersten Wicklung angeordnete zweite Wicklung (auf dem Kern) umfasst, welche die zweite Primärseite des Stromwandlers bildet. Falls zu wenig Energie aus der ersten Wicklung die Energieversorgung erreicht, wird also an einem Leiterpaar eine Spannung abgegriffen und die dabei abgegriffene Energie in die zweite Wicklung in Form eines Wechselstroms eingespeist.

Zweckmäßigerweise werden bei der Herstellung des Stromwandlers zunächst die erste Wicklung und anschließend die zweite Wicklung um einen Kern des Stromwandlers gewickelt.

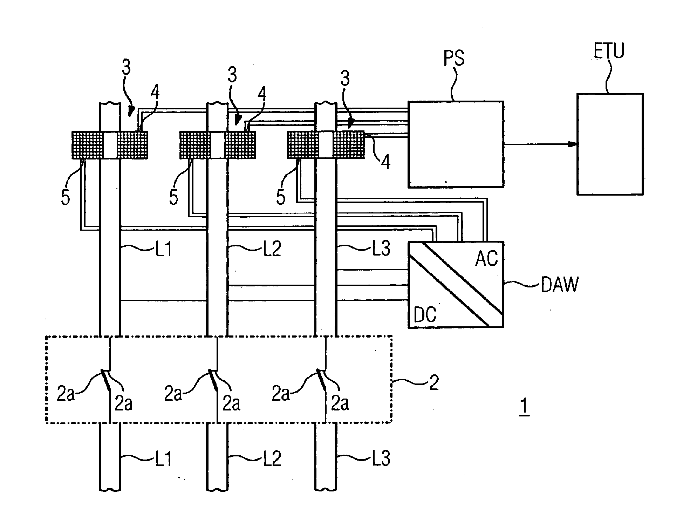

Die Erfindung wird nachfolgend anhand einer Zeichnung näher beschrieben, deren einzige Figur einen dreipoligen Leistungsschalter mit einer elektronischen Auslöseeinheit ETU (Electronic Trip Unit) für Niederspannungen zeigt, im Folgenden kurz Schalter 1 genannt. Die Stromleiter L1, L2, L3 der drei Pole verlaufen durch den Schalter 1 und werden bei Wechselstrombetrieb von einem Wechselstrom und bei Gleichstrombetrieb von einem Gleichstrom als Primärströme durchflossen. Die Primärströme fließen bei geschlossenen Kontakten 2 des Schalters 1 - wie in der Figur gezeigt - über aneinander anliegende Kontaktstücke 2a (Kontaktelemente), die zum Öffnen des Schalters 1 voneinander getrennt werden.

Zur Versorgung der elektronischen Auslöseeinheit ETU dienen transformatorische Stromwandler 3, deren erste Primärwicklung (erste Primärseite) die Leiter L1, L2, L3 bilden. Die Sekundärwicklung 4 (Sekundärseite) stellt der Energieversorgung PS der Auslöseeinheit ETU jeweils die benötigte elektrische Energie bei sich zeitlich änderndem Primärstrom durch mindestens einen der Leiter L1,L2,L3 zur Verfügung, also bei Wechselstrombetrieb oder wenn ein Kurzschlussstrom durch mindestens einen der Leiter L1, L2, L3 fließt, da auch der Eintritt eines Kurzschlussstroms mit einer zeitlichen Stromänderung verbunden ist.

Für Betriebsarten, bei denen aus der Sekundärwicklung 4 zu wenig Energie geliefert wird, also z.B. bei Gleichströmen (Betriebsart), gepulsten Gleichströmen oder kleinen Primärströmen, ist eine zweite Primärwicklung 5 (zweite Primärseite) vorgesehen, welche auf die Sekundärwicklung 4 um den Kern des Stromwandlers gewickelt ist. Die Wicklung 5 wird über einen Wandler DAW (DC-AC-Wandler bzw. AC-AC-Wandler) mit einem Wechselstrom gespeist und damit die elektronische Auslöseeinheit ETU über die Sekundärwicklung 4 versorgt. Die elektrische Energie wird dabei über einen Spannungsabgriff zwischen den Leitern entnommen und von dem Wandler DAW in einen Wechselstrom umgewandelt.

## Patentansprüche

1. Schalter (1)
mit einem durch den Schalter (1) verlaufenden Leiter ( L1, L2, L3), der von einem Strom durchflossen wird,
mit bei geschlossenem Schalter (1) aneinander anliegenden Kontaktelementen (2a), die zum Öffnen des Schalters (1) voneinander getrennt werden,
mit einer elektronischen Auslöseeinheit (ETU), die bei Überschreitung eines vorgegebenen Stromgrenzwerts die Trennung der Kontaktelemente (2a) auslöst,
mit einer Energieversorgung (PS) für die Auslöseeinheit (ETU),die einen am Leiter (L1, L2, L3) angeordneten transformatorischen Stromwandler (3) umfass, wobei eine mit der Auslöseeinheit (ETU) verbundene erste Wicklung (4) dessen Sekündärseite und der Leiter (L1, L2, L3) dessen erste Primärseite bildet, wobei der. Leiter (L1, L2, L3) die elektronische Auslöseeinheit (ETU) über den Strömwandler (3) bei sich zeitlich änderndem Strom mit elektrischer Energie versorgt,
**dadurch gekennzeichnet,**
**dass** auf dem Kern des Stromwandlers (3) zusätzlich zur ersten Wicklung (4) eine zweite Wicklung (5) angeordnet ist, welche die zweite Primärseite des Stromwandlers (3) bildet, und dass ein Wandler (DAW) vorgesehen ist, der am Leiter (L1, L2, L3) eine Spannung abgreift und die zweite Wicklung (5)mit einem Wechselstrom speist, wenn die erste Wicklung (4) zu wenig elektrischer Energiefür die Versorgung der Auslöseeinheit (ETU) liefert.

2. Schalter nach Anspruch 1,
**dadurch gekennzeichnet,**
**dass** der Stromwahdler, (3) einen Kern aufweist, auf den die erste Wicklung (4) und die zweite Wicklung (5) gewickelt sind.

## Claims

1. Switch (1)
having a conductor (L1, L2, L3) which runs through the switch (1) and through which current flows,
having contact elements (2a) which bear one against the other when the switch (1) is closed and which are separated from one another for the purpose of opening the switch (1),
having an electronic tripping unit (ETU) which triggers the separation of the contact elements (2a) when a prespecified current limit value is exceeded,
having a power supply (PS) for the tripping unit (ETU), said power supply comprising a transformer-based current transformer (3) which is arranged on the conductor (L1, L2, L3), with a first winding (4) which is connected to the tripping unit (ETU) forming the secondary side of said current transformer and the conductor (L1, L2, L3) forming the first primary side of said current transformer, with the conductor (L1, L2, L3) supplying electrical power to the electronic tripping unit (ETU) via the current transformer (3) when the current varies over time,
**characterized**
**in that** a second winding (5) which forms the second primary side of the current transformer (3) is arranged on the core of the current transformer (3) in addition to the first winding (4), and in that a converter (DAW) is provided, said converter tapping off a voltage from the conductor (L1, L2, L3) and feeding an alternating current to the second winding (5) when the first winding (4) supplies too little electrical power for supplying the tripping unit (ETU).

2. Switch according to Claim 1,
**characterized**
**in that** the current transformer (3) has a core on which the first winding (4) and the second winding (5) are wound.

## Revendications

1. Commutateur (1)
comprenant un conducteur (L1, L2, L3) courant à travers le commutateur (1), qui est parcouru par un courant, comprenant, lorsque le commutateur (1) est fermé, des éléments de contact adjacents (2a), qui sont séparés les uns des autres pour l'ouverture du commutateur (1),
comprenant une unité de déclenchement électronique (ETU), qui déclenche la séparation des éléments de contact (2a) lorsqu'une valeur seuil de courant prédéterminée est dépassée, comprenant une alimentation en énergie (PS) pour l'unité de déclenchement (ETU), qui comprend un transformateur de courant (3) disposé au niveau du conducteur (L1, L2, L3), un premier enroulement (4) raccordé à l'unité de déclenchement (ETU) formant son côté secondaire et le conducteur (L1, L2, L3) son côté primaire, le conducteur (L1, L2, L3) alimentant en énergie électrique l'unité de déclenchement électrique (ETU) via le transformateur de courant (3) lorsque le courant varie dans le temps,
**caractérisé en ce**
**que** sur le noyau du transformateur de courant (3) est disposé en complément du premier enroulement (4) un deuxième enroulement (5), qui forme le deuxième côté primaire du transformateur de courant (3), et en ce qu'un transformateur (DAW) est prévu, qui prélève une tension au niveau du conducteur (L1, L2, L3) et fournit un courant alternatif au deuxième enroulement (5), lorsque le premier enroulement (4) délivre une énergie électrique insuffisante pour l'alimentation de l'unité de déclenchement (ETU).

2. Commutateur selon la revendication 1,
**caractérisé en ce**
**que** le transformateur de courant (3) présente un noyau, sur lequel sont enroulés le premier enroulement (4) et le deuxième enroulement (5).
